(19) Europäisches Patentamt
European Patent Office
Office européen des brevets

(11) Numéro de publication : **0 467 726 A1**

(12) **DEMANDE DE BREVET EUROPEEN**

(21) Numéro de dépôt : **91401587.0**

(22) Date de dépôt : **14.06.91**

(51) Int. Cl.⁵ : **G06K 19/06**

(30) Priorité : **15.06.90 FR 9007495**

(43) Date de publication de la demande :
**22.01.92 Bulletin 92/04**

(84) Etats contractants désignés :
**AT BE CH DE DK ES FR GB GR IT LI LU NL SE**

(71) Demandeur : **MATRA COMMUNICATION**
**50, rue du Président Sadate Creac'h Gwenn**
**F-29101 Quimper (FR)**

(72) Inventeur : **Gastaldi, Raymond**
**27 Grande Rue du Saulxier, Saulx les**
**Chartreux**
**F-91160 Longjumeau (FR)**

(74) Mandataire : **Fruchard, Guy et al**
**CABINET BOETTCHER 23, rue la Boétie**
**F-75008 Paris (FR)**

(54) **Carte électronique.**

(57) La carte électronique selon l'invention comporte un circuit électronique (1) porté par une plaquette (2) disposée dans un boîtier isolant (3) généralement plat, deux couches conductrices (4) s'étendant sensiblement parallèlement à la plaquette (2) et des organes conducteurs (8) réunissant les deux couches conductrices (4) sur au moins un côté de celles-ci.

FIG_1

La présente invention concerne une carte électronique.

On connaît des cartes électroniques comportant un circuit électronique porté par une plaquette disposée dans un boîtier généralement plat. Ces cartes sont de plus en plus utilisées comme mode de paiement pour des services particuliers, par exemple pour des communications téléphoniques ou pour le péage d'un stationnement. Dans ce cas, l'organe électronique à mémoire est initialisé lors de la fabrication de la carte électronique et est ainsi mis dans un état représentant une somme d'argent déterminée. Lors de l'utilisation de la carte électronique, l'organe électronique à mémoire du circuit électronique est progressivement modifié de façon correspondante à un épuisement du crédit représenté dans l'état initial.

Il est donc important que l'organe électronique à mémoire reste dans un état représentatif de l'utilisation qui a été faite de la carte électronique quelles que soient les conditions dans lesquelles l'utilisateur de la carte électronique est amené à l'utiliser. En particulier, l'utilisateur doit pouvoir l'utiliser même après avoir été chargé à un potentiel élevé sous l'action de l'électricité statique, sans que l'état de l'organe électronique à mémoire ne soit modifié

Pour assurer cette protection on a envisagé de fixer les potentiels des bornes de l'organe électronique à mémoire au moyen d'organes qui l'insensibilisent aux décharges électrostatiques . Le coût d'une telle réalisation est toutefois très élevé et incompatible avec une diffusion de la carte électronique pouvant représenter des sommes peu importantes.

Un but de l'invention est de proposer une protection économique des cartes électroniques contre les perturbations dues aux décharges électrostatiques.

En vue de la réalisation de ce but, on prévoit selon l'invention une carte électronique comportant un circuit électronique porté par une plaquette disposée dans un boîtier isolant généralement plat, et dans laquelle on prévoit en outre deux couches conductrices s'étendant sensiblement parallèlement à la plaquette portant le circuit électronique de part et d'autre de celle-ci, ces couches conductrices étant réunies entre elles sur au moins un côté par des organes conducteurs et isolées du circuit électronique par le boîtier.

Bien que les deux couches conductrices ne constituent pas véritablement une cage de Faraday on a constaté que l'on obtenait ainsi une protection satisfaisante lors de l'application de décharges électrostatiques très importantes.

Selon une version avantageuse de l'invention, les couches conductrices sont formées par des feuilles métalliques collées sur le boîtier à l'extérieur de celui-ci. De préférence, les couches conductrices et les organes conducteurs sont formés par une seule feuille repliée sur le boîtier. Ainsi, les couches conductrices sont très aisément mises en place après les opérations habituelles de fabrication de la carte électronique.

Selon un mode de réalisation préféré de l'invention, les couches conductrices sont recouvertes d'une feuille de protection. Ainsi on évite non seulement que les couches conductrices ne soient détériorées lors de l'utilisation de la carte, mais on peut également utiliser les feuilles de protection comme support pour des informations relatives à l'utilisation de la carte, en particulier en utilisant une feuille de protection transparente et en disposant les inscriptions d'informations sur la face interne de la feuille de protection.

D'autres caractéristiques et avantages de l'invention apparaîtront encore à la lecture de la description qui suit d'un mode de réalisation particulier non limitatif de l'invention en liaison avec les figures ci-jointes parmi lesquelles :
   – la figure 1 est une vue en perspective partiellement écorchée d'une carte électronique selon l'invention,
   – la figure 2 est une vue en perspective d'une feuille métallique utilisée pour l'invention.

En référence aux figures, on notera tout d'abord que pour une plus grande clarté de l'exposé l'épaisseur des différentes couches de matière constituant la carte électronique selon l'invention a été fortement exagérée.

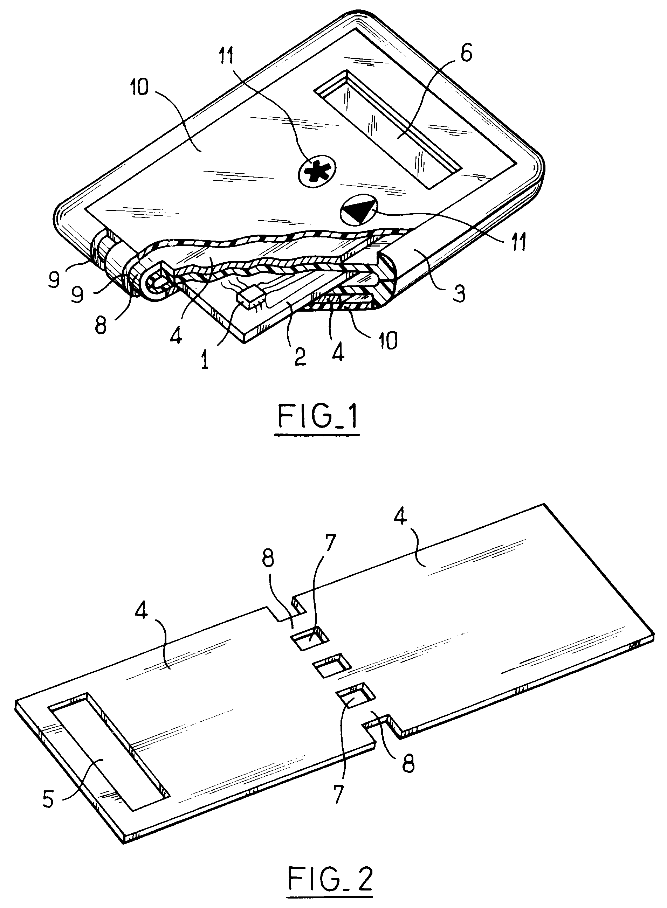

La carte électronique selon l'invention comporte un circuit électronique 1 porté par une plaquette 2 disposée dans un boîtier isolant 3 généralement plat. Deux couches conductrices 4 sont collées à l'extérieur du boîtier 3 sur des faces de celui-ci qui s'étendent sensiblement parallèlement à la plaquette 2 portant le circuit électronique 1. Dans le mode de réalisation illustré, les deux couches conductrices 4 sont formées par deux parties d'une même feuille métallique comme représenté sur la figure 2. La feuille métallique est découpée selon une fenêtre 5 destinée à laisser un accès visuel à un dispositif d'affichage 6 de la carte électronique, et selon des petites ouvertures 7 délimitant des bretelles 8 qui forment des organes conducteurs réunissant entre elles les couches conductrices 4.

Lors de la fabrication de la carte électronique, après la fermeture du boîtier, la feuille métallique est repliée sur le boîtier en disposant les bretelles 8 dans des encoches latérales 9 du boîtier afin de protéger les bretelles 8 lors d'une utilisation de la carte électronique. Des feuilles de protection 10 sont ensuite collées sur les couches conductrices 4. De façon habituelle, ces feuilles de protection sont de préférence transparentes et comportent sur leur face interne des inscriptions 11 qui correspondent, par exemple, à des ouvertures dans le boîtier et servent à signaler à l'utilisateur les endroits où il faut appuyer pour utiliser la carte électronique. On notera à ce propos que les couches conductrices sont extrêmement minces. Elles ont par exemple une épaisseur de l'ordre de un centième de millimètre et forment une cage de Faraday isolée du circuit électronique par le boîtier.

Bien entendu l'invention n'est pas limitée au mode de réalisation décrit et on peut y apporter des variantes de réalisation sans sortir du cadre de l'invention. En particulier, bien que les couches conductrices aient été illustrées par une feuille métallique, on peut réaliser les couches conductrices par un simple dépôt conducteur, par exemple un dépôt de métal ou de graphite, à l'intérieur du film de protection. On peut également prévoir d'effectuer un dépôt conducteur sur une partie du boîtier afin de réaliser la liaison électrique entre les deux couches conductrices.

**Revendications**

1. Carte électronique comportant un circuit électronique (1) porté par une plaquette (2) disposée dans un boîtier isolant (3) généralement plat, caractérisée en ce qu'elle comporte deux couches conductrices (4) s'étendant sensiblement parallèlement à la plaquette (2) portant le circuit électronique (1) de part et d'autre de celle-ci, ces couches conductrices (4) étant réunies entre elles sur au moins un côté par des organes conducteurs (8), et isolées du circuit électronique par le boîtier.

2. Carte électronique selon la revendication 1 caractérisée en ce que les couches conductrices sont formées par des feuilles métalliques (4) collées sur le boîtier à l'extérieur de celui-ci.

3. Carte électronique selon la revendication 1 ou la revendication 2, caractérisé en ce que les couches conductrices et les organes conducteurs sont formés par une seule feuille repliée sur le boîtier.

4. Carte électronique selon l'une des revendications 1 à 3 caractérisée en ce que les couches conductrices (4) sont recouvertes de feuilles de protection (10).

FIG_1

FIG_2

EP 0 467 726 A1

Office européen
des brevets

**RAPPORT DE RECHERCHE EUROPEENNE**

Numero de la demande

EP    91 40 1587

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 065 083 (GAO GESELLSCHAFT F!R AUTOMATION UND ORGANISATION) <br> * le document en entier * <br> --- | 1-4 | G06K19/06 |
| X | EP-A-0 338 080 (FANUC) <br> * le document en entier * <br> --- | 1,2 | |
| X | EP-A-0 037 760 (FLONIC) <br> * page 5, ligne 17 - page 7, ligne 13; figures 3-7 * <br> --- | 1,3,4 | |
| X | US-A-4 791 608 (FUSHIMOTO) <br> * le document en entier * <br> ----- | 1 | |
| | | | **DOMAINES TECHNIQUES RECHERCHES (Int. Cl.5)** |
| | | | G06K |

Le présent rapport a été établi pour toutes les revendications

| Lieu de la recherche | Date d'achèvement de la recherche | Examinateur |
|---|---|---|
| LA HAYE | 23 OCTOBRE 1991 | GYSEN L.A.D. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.............................................................
& : membre de la même famille, document correspondant

EPO FORM 1503 03.82 (P0402)

5